Europäisches Patentamt

European Patent Office

Office européen des brevets

(19)

(11) Veröffentlichungsnummer: **0 402 772**

**A1**

(12) **EUROPÄISCHE PATENTANMELDUNG**

(21) Anmeldenummer: **90110795.3**

(22) Anmeldetag: **07.06.90**

(51) Int. Cl.5: **C09D 201/00, C09D 7/00,**
**//(C09D201/00,101:14)**

(30) Priorität: **10.06.89 DE 3919028**

(43) Veröffentlichungstag der Anmeldung:
**19.12.90 Patentblatt 90/51**

(84) Benannte Vertragsstaaten:
**BE DE ES FR GB IT SE**

(71) Anmelder: **HOECHST AKTIENGESELLSCHAFT**
**Postfach 80 03 20**
**D-6230 Frankfurt am Main 80(DE)**

(72) Erfinder: **Esser, Klaus**
**Eulerweg 31**
**D-6103 Griesheim(DE)**
Erfinder: **Dürr, Helmut, Dr.**
**Hansaallee 111**
**D-6000 Frankfurt am Main(DE)**
Erfinder: **Plath, Dieter, Dr.**
**Hildastrasse 32**
**D-6200 Wiesbaden(DE)**
Erfinder: **Schon, Manfred, Dr.**
**Humboldtstrasse 17**
**D-6054 Rodgau(DE)**
Erfinder: **Kubillus, Uwe, Dr.**
**Schaperstrasse 11**
**D-6200 Wiesbaden(DE)**

(54) **Überzugsmasse, Verfahren zur Herstellung von Überzügen und damit beschichtete Substrate.**

(57) Die Erfindung betrifft eine Überzugsmasse zur Herstellung von Beschichtungen, insbesondere von Mehrschichtlackierungen aus mindestens einer Basisschicht und gegebenenfalls mindestens einer transparenten Deckschicht, wobei die Überzugsmasse filmbildende Harze (A), Celluloseester (B), Lösungsmiteel (C), Metall-Pigmente (D) und gegebenenfalls Vernetzungsmittel (E) sowie gegebenenfalls weitere Lackadditive (F), enthält, dadurch gekennzeichnet, daß der Celluloseester (B) ein Acetylgehalt von 2,0 bis 30 Gew.-%, einen Butyrylegehalt von 17 bis 53 Gew.-% und ein mittleres Molekulargewicht $M_n$ von mindestens 25 000 aufweist und wobei dieser Celluloseester (B) in die Überzugsmasse in Form einer pastösen, thixotropen Vormischung eingesetzt wurde.

Weiterhin bezieht sich die Erfindung auf ein Verfahren zur Herstellung eines Mehrschicht-Überzuges sowie auf die so beschichteten Substrate.

Die erfindungsgemäßen Überzugsmassen zeich- nen sich u.a. durch hohe Festkörpergehalte bei niedrigen Viskositäten aus und liefern Überzüge mit einwandfreien Metall-Effekten.

## Überzugsmasse, Verfahren zur Herstellung von Überzügen und damit beschichtete Substrate

Metallic-Lacke haben in den letzten Jahren in der Automobilindustrie sehr an Bedeutung gewonnen. Während früher noch ein großer Teil der Karosserien mit Einschicht-Metallic-Lacken versehen wurde, werden heute Automobile praktisch ausschließlich nach dem Mehr(2)-Schicht-Metallic-Verfahren, dem sogenannten "Naß-in-Naß-Verfahren", lackiert. Bei diesem Verfahren wird zuerst ein im wesentlichen physikalisch trocknender Basislack, der mit Aluminium, evtl. unter Zusatz anderer farbgebender Pigmente pigmentiert ist, und anschließend nach kurzer Ablüftung ein Klarlack als Decklack aufgebracht. Der Basislack besteht dabei hauptsächlich aus organischem Lösungsmittel, einem physikalisch trocknenden Bindemittel wie Celluloseester, insbesondere Celluloseacetobutyrat (CAB), einem filmbildenden Harz, wie einem ölfreien Polyester, einem Vernetzungsmittel, wie Melaminharz, und Pigmenten (vgl. u.a. DE-Offenlegungsschrift 1.949.372). Neben einer schnelleren physikalischen Trocknung des Lackfilms bewirkt der Celluloseester u.a. auch eine Verbesserung des Metallic-Effektes. Hierzu sind jedoch erhebliche Mengen des in Basislack-Lösemitteln löslichen Celluloseesters erforderlich.

Als Pigmente finden außer Aluminium und Iriodin sowohl anorganische, wie Titandioxid, Eisenoxide, als auch organische Pigmente, wie Phthalocyanine, Chinacridone und/oder halogenierte Thioindigo-Pigmente Verwendung. Der Festkörpergehalt der Basislacke, der meist um 15 % liegt, ist recht niedrig. Der Rest ist flüchtiges Lösungsmittel, das sich zum größten Teil aus Estern wie Ethylenglykol-Monoethylacetat, Butyl-, und Ethylacetat und Aromaten, wie Toluol oder Xylol, zusammensetzt.

Als zweite Schicht wird nach einer Ablüftungszeit von nur wenigen Minuten ein Klarlack aufgetragen, der ein lufttrocknender oder forciert getrockneter Lack sein kann, wie etwa im Falle der Reparatur einer Karosserie, oder ein Einbrennlack, wie er bei der Autolackierung am Band Verwendung findet. Im letzten Fall werden beide Lackschichten unter den üblichen Einbrennbedingungen (10 bis 30 min. bei 120 bis 150°C) zusammen ausgehärtet. Der hohe Anteil an Lösemittel im Basislack stellt eine beachtliche Belastung für die Umwelt dar und verursacht darüber hinaus auch entsprechende Kosten, d.h., die Mehrbelastung durch Verwendung von Lösemittel und ihre umweltschonende Beseitigung.

Es hat deshalb nicht an Versuchen gefehlt, den Festkörpergehalt anzuheben bzw. den Anteil an flüchtigen Lösemitteln zu reduzieren. Dabei wurde festgestellt, daß Lacke mit einem in üblicher Weise erhöhten Festkörpergehalt eine zu hohe Viskosität aufweisen, nur schwierig aufzutragen sind und zu Lackschichten mit unbefriedigenden anwendungstechnischen Eigenschaften führen. Daher ist dieser Weg zur Herstellung von umweltfreundlicheren und durch den höheren Festkörpergehalt ergiebigeren und damit wirtschaftlichen Lacken, insbesondere Basislacken nicht gangbar.

Die Erfindung betrifft nun eine Überzugsmasse zur Herstellung von Beschichtungen, insbesondere von Mehrschichtlackierungen aus mindestens einer Basisschicht und gegebenenfalls mindestens einer transparenten Deckschicht, wobei die Überzugsmasse filmbildende Harze (A), Celluloseester (B), Lösungsmittel (C), vorzugsweise Metall-Pigmente (D) und gegebenenfalls Vernetzungsmittel (E) sowie gegebenenfalls weitere Lackadditive (F) enthält, dadurch gekennzeichnet, daß der Celluloseester (B) einen Acetylgehalt von 2,0 bis 30 Gew.-%, einen Butyrylgehalt von 17 bis 53 Gew.-% und ein mittleres Molekulargewicht $\overline{M}_n$ von mindestens 25 000 aufweist und wobei dieser Celluloseester (B) in die Überzugsmasse in Form einer pastösen, thixotropen Vormischung eingebracht wurde.

Weiterhin bezieht sich die Erfindung auf ein Verfahren zur Herstellung eines Mehrschichten-Überzuges unter Verwendung dieser Überzugsmasse sowie auf die so beschichteten Substrate.

Es war überraschend und nicht vorherzusehen, daß in der erfindungsgemäßen Überzugsmasse die Menge an Celluloseester von bisher üblicherweise ca. 40 % auf etwa die Hälfte reduziert werden kann. Dies ermöglicht eine Erhöhung des Festkörpergehalts von ca. 15 % auf ca. 30 %, vorzugsweise 26 % und damit eine beachtliche Einsparung an Lösemittel. Es war weiterhin überraschend, daß ein derart zusammengesetzter Lack, trotz des hohen Festkörpergehaltes, eine niedrige Viskosität besitzt; er läßt sich daher ohne Schwierigkeiten verarbeiten und ergibt im Falle eines Metallic-Lackes einen einwandfreien Metalleffekt. In Folge des speziellen rheologischen Verhaltens und der raschen Trocknung tritt auch kein Ablaufen an senkrechten Flächen und keine Wolkenbildung ein. Bei einer Mehrschichten-Lackierung kann außerdem schon nach wenigen Minuten Trocknung bei Raumtemperatur ohne Schwierigkeiten überlackiert werden, d.h., es findet keine Anlösung des angetrockneten Basislackes durch den später aufgetragenen Decklack statt. Im allgemeinen beträgt die Ablüftzeit, nach der die Basislackschicht überlackierbar ist, 2 bis 10 min., vorzugsweise 3 bis 6 min. bei 15 bis 30°C, vorzugsweise 20 bis 25°C.

Bei dem Celluloseester (B) handelt es sich vorzugsweise um Celluloseacetatbutyrat; daneben kommen auch Cellulosepropionat, Cellulosebutyrat und Celluloseacetatpropionat, sowie Mischungen der verschiedenen Celluloseester in Frage. Das bevorzugt eingesetzte Celluloseacetatbutyrat besitzt einen Acetylgehalt von 2 bis 5 Gew.-%, insbesondere 3 bis 5 Gew.-%, und einen Butyrylgehalt von vorzugsweise 47 bis 53 Gew.-% und insbesondere 50 bis 52 Gew.-%. Der Hydroxylgehalt beträgt zumeist 0,5 bis 1,8 Gew.-%, vorzugsweise 0,6 bis 1,0 Gew.-%. Sein mittleres Molekulargewicht $\overline{M}_n$ weist vorzugsweise Werte zwischen 30 000 und 60 000 und insbesondere zwischen 54 000 und 60 000 auf.

Die Menge an Celluloseester (B) in der Überzugsmasse liegt im allgemeinen bei 0,5 bis 6, vorzugsweise bei 1 bis 3 Gew.-%, bezogen auf die Summe von (A) und (B) sowie gegebenenfalls (E) (Festkörpergehalt). Der erfindungsgemäße Celluloseester (B) kann gegebenenfalls auch in Abmischung mit herkömmlichen Celluloseestern eingesetzt werden, z.B. solchen, die in der eingangs erwähnten DE-Offenlegungsschrift 1.949.372 beschrieben werden.

Erfindungsgemäß wird der Celluloseester (B) der Überzugsmasse in Form einer pastösen (dickflüssigen), thixotropen Vormischung (master batch) zugefügt, die vorzugsweise eine gelartige Konsistenz hat. Neben dem Celluloseester enthält diese Vormischung ein Verdünnungsmittel, das den Celluloseester im wesentlichen nur anquillt. Der Siedepunkt (bei Normaldruck) dieses Verdünnungsmittels liegt im allgemeinen mindestens bei 70 °C, vorzugsweise zwischen 70 und 250 °C. Beispiele für diese Verdünnungsmittel sind aromatische oder aliphatische Kohlenwasserstoffe, wie Benzol, Toluol, die verschiedenen Xylole, höhersiedende Mineralölfraktionen, wie ®Solvesso, höhere Alkohole mit mindestens 4 C-Atomen, vorzugsweise 4 bis 10 C-Atomen, wie n-Butanol, Isobutanol, Pentanole, Hexanole etc. oder entsprechende Gemische.
Die Menge an Celluloseester (B) in dieser Vormischung liegt zumeist bei 1 bis 10 Gew.-%, vorzugsweise bei 2 bis 6 Gew.-%, bezogen auf diese Vormischung.

In einer weiteren Ausgestaltungsform enthält diese Vormischung zusätzlich auch Polymere oder Präpolymere, insbesondere solche, die ohnehin in der erfindungsgemäßen Überzugsmasse Einsatz finden. Diese Polymere/Präpolymere können zumindest teilweise in dem für die Vormischung benutzten Verdünnungsmittel löslich sein. Beispiele für derartige Polymere/Präpolymere sind u.a. übliche Aminoharze, wie Polykondensate aus Melamin, Benzoguanamin und/oder Harnstoff mit Formaldehyd, die beispielsweise mit Monoalkoholen verethert sind, wobei als Monoalkonole z.B. Methanol, Ethanol, Propanol, Butanol in Frage kommen. Genannt seien hier methyliertes, propyliertes oder butyliertes Methylolmelamin. Weitere Beispiele sind vorzugsweise ölfreie Polyesterharze sowie Acrylatharze.

Zur Herstellung dieser Vormischung werden der Celluloseester (B) mit dem(n) anderen Mischungsbestandteil(en) für 30 bis 180 Minuten, vorzugsweise 100 bis 140 Minuten in der Hitze zusammengebracht, wobei das Temperaturniveau bei mindestens 70 °C, vorzugsweise zwischen 70 und 250 °C unter Normalbedingungen liegt.

Als filmbildende Harze (A), deren mittlere Molekulargewichte $\overline{M}_n$ (bestimmt durch Gelpermeationschromatographie gegenüber Polystyrolstandard) üblicherweise im Bereich von etwa 500 bis 50 000, vorzugsweise etwa 1000 bis 20 000 liegen, kommen die hierfür bekannten Polymeren in Betracht, die vernetzungsaktive Gruppen, vor allem Hydroxyl- und/oder Amino-Gruppen, enthalten. Beispiele hierfür sind OH-gruppenhaltige Kunstharze (Polyole) wie Polyetherpolyole, Polyacetalpolyole, Polyesteramidpolyole, Epoxidharzpolyole oder deren Umsetzungsprodukte mit $CO_2$, Phenolharzpolyole, Polyharnstoffpolyole, Polyurethanpolyole, teilweise verseifte Homo- und Copolymerisate von Vinylestern, teilweise acetalisierte Polyvinylalkohole, Polyesterpolyole oder Acrylatharzpolyole. Weiterhin kommen hier OH-haltige Phenol-, Harnstoff- oder Melaminharze in Frage. Derartige Polyole, die auch in Mischung eingesetzt werden können, sind beispielsweise in den DE-Offenlegungsschriften 2 314 513 und 3 124 784 sowie in den EP-Offenlegungsschriften 123 880 und 189 728 beschrieben. Weitere erfindungsgemäß geeignete Harze (A) für den Basislack sind beispielsweise auch in den DE-Offenlegungsschriften 1 949 372, 2 818 093, 2 818 100 und 3 720 984 sowie den EP-Offenlegungsschriften 5 428 und 80 840 offenbart. Bevorzugt sind Epoxidharzpolyole, Polyesterpolyole, Polyurethanpolyole, Polyetherpolyole und Acrylatharzpolyole.

In einer Ausführungsform der Erfindung können diese filmbildenden Harze selbsthärtend sein, indem beispielsweise ein Teil der Hydroxylgruppen mit teilverkappten Isocyanaten umgesetzt ist.

Die Menge an Komponente (A) in der erfindungsgemäßen Überzugsmasse liegt im allgemeinen zwischen 5 und 90 Gew.-%, vorzugsweise zwischen 5 und 30 Gew.-%, bezogen auf die Überzugsmasse.

Als Lösungsmittel (C) kommen vor allem (cyclo)aliphatische und/oder aromatische Kohlenwasserstoffe, wie Hexan, Heptan, Cyclohexan, Benzol, Toluol, die verschiedenen Xylole sowie aromatische Lösemittel im Siedebereich von ca. 150 bis 180 °C (höhersiedende Mineralölfraktionen, wie [R]-Solvesso) in Betracht; weiterhin halogenierte Kohlenwasserstoffe, Ether bzw. Glykolether, wie Diethylether, 1,2-Dimethoxyethan, Ethylenglykoldibutylether, Tetrahydrofuran oder Dioxan; Ketone, wie beispielsweise Aceton, Methylethylketon, Methylisobutylketon, Cyclohexanon und ähnliche; Ester wie Ethylacetat, Butylacetat, Ethylenglykolmonoethylacetat, Methoxypropylacetat; N-Methyl-pyrrolidon; ein oder mehrwertige Alkohole wie Butanol, Ethylenglykolmonoethyl(butyl)ether etc.. Die Menge des Lösungsmittels ist so zu bemessen, daß die Überzugsmasse entsprechend der gewählten Auftragsmethode optimal handhabbar ist und die aufgebrachten Lackfilme in ausreichendem Maße verlaufen. Im allgemeinen reichen dafür Mengen von 70 bis 85, vorzugsweise 70 bis 80 Gew.%, bezogen auf die Überzugsmasse, aus.

Die erfindungsgemäßen Überzugsmassen enthalten -gegebenenfalls neben üblichen nichtmetallischen (Farb-)Pigmenten (siehe hierzu nachfolgend unter F) -vorzugsweise pulverförmige Metallpigmente (D), einzeln oder im Gemisch, wie Alubronzen oder Kupferbronzen, vorzugsweise Aluminiumpulver. Deren Menge liegt im allgemeinen bei 0,5 bis 60, vorzugsweise 0,5 bis 40 Gew.-%, bezogen auf (A).

Zweckmäßigerweise werden diese Metallpigmente in Form von Pigmentpasten der Überzugsmasse einverleibt. Diese Pigmentpaste enthält neben dem Metallpigment und Lösungsmittel ein sogenanntes Anreibe- oder Pastenharz, wie Polyester oder Acrylharze.

Häufig kann dabei das Anreibeharz dem filmbildenden Harz (A) entsprechen.

Als Vernetzungsmittel (E) - für den Fall, daß (A) nicht selbsthärtend ist - sind die für fremdvernetzende 2-Komponentenlacke üblichen Härter geeignet, beispielsweise Aminoplastharze, wie Melamin-, Benzoguanamin-, Harnstoff- oder Thioharnstoff-Formaldehyd-Kondensate, insbesondere mit Alkanolen veretherte Melamin/Formaldehyd-Kondensate; weiterhin Phenolplastharze, (verkappte) Polyisocyanate, $\beta$-Hydroxyester von Polycarbonsäuren, Poly($\beta$-hydroxyurethane), Polyepoxidverbindungen, Umsetzungsprodukte von Malonsäuredialkylestern mit Aldehyden und Ketonen, die unter Wasserabspaltung zu ungesättigten Dicarbonsäureestern reagieren (Knoevenagel'sche Synthese), Umesterungs- oder Umamidierungshärter sowie Michael-Additionsprodukte, beispielsweise wie sie in den DE-Offenlegungsschriften 33 15 469, 34 17 441 und 34 36 345 beschrieben sind.

Die Vernetzungsmittel (E) werden zumeist in Mengen von bis 90 Gew.-%, vorzugsweise von 10 bis 70 Gew.-%, bezogen auf das filmbildende Harz (A), eingesetzt.

Übliche Lackadditive (F), die gegebenenfalls in der erfindungsgemäßen Überzugsmasse vorhanden sein können, sind beispielsweise (Farb-)Pigmente und Füllstoffe sowie Lackhilfsmittel, z.B. Antiabsetzmittel, Entschäumungs-und/oder Netzmittel, Verlaufmittel, Reaktiv-Verdünner, Weichmacher, Stabilisatoren, Katalysatoren, Rheologiehilfsmittel (wie Mikrogele, Polyharnstoffderivate) und dgl.. Zumindest ein Teil dieser Additive kann der Überzugsmasse erst unmittelbar vor der Verarbeitung zugegeben werden.

Außerdem ist eine Zugabe zu den Einzelkomponenten oder der Gesamtmischung möglich. Die Auswahl und die Dosierung dieser Stoffe sind dem Fachmann bekannt.

Als (Farb-)Pigmente, die anorganischer oder organischer Natur sein können, sind beispielsweise Eisenoxide (Eisenoxidrot, Eisenoxidschwarz), Bleioxide, Bleisilikate, Titandioxid, Zinkoxid, Zinksulfid, Chromtitangelb, Ultramarinblau, Ruß, Phthalocyaninkomplexe, Chinacridone, halogenierte Thioindigo-Pigmente, Flavanthrongelb, Indanthronblau, Perylenrot etc. sowie Effektpigmente, wie Iriodin, zu nennen. Diese Pigmente werden üblicherweise in Mengen von 0,1 bis 20, vorzugsweise von 0,5 bis 5 Gew.-%, bezogen auf Komponente (A), eingesetzt.

Der Gesamt-Festkörpergehalt (einschließlich der Metallpigmente (D) und der Lackadditive (F)) der erfindungsgemäßen Überzugsmassen beträgt im allgemeinen 10 bis 30 Gew.-%, vorzugsweise 15 bis 30 Gew.-% und insbesondere 20 bis 30 Gew.-% (120 °C/1 h). Der Festkörpergehalt variiert mit dem Verwendungszweck und liegt bei Metallic-Lacken (j Gehalt an Komponente (D)) in der Regel etwas tiefer als bei sogenannten unifarbigen Lakken (die nicht (D) enthalten).

Die Herstellung der erfindungsgemäßen Überzugsmassen erfolgt nach den üblichen Methoden der Lackzubereitung.

Der Auftrag der erfindungsgemäßen Überzugsmassen zur Herstellung der Basisschicht geschieht in bekannter Weise, bevorzugt durch Spritzen nach dem Druckluftverfahren oder mittels luftloser oder elektrostatischer Spritzverfahren; daneben kommen beispielsweise auch Rakeln, Tauchen und Walzen in Betracht. Eisen bzw. Stahl sind dabei die bevorzugten Substrate, jedoch sind auch andere Metalle, z.B. Aluminium, Kupfer, Magnesium oder Legierungen geeignet. Weiterhin können grundsätzlich auch nichtmetallische Substrate, wie keramische Stoffe, Kunststoffe udgl., eingesetzt werden, sofern sie den Härtungstemperaturen widerstehen.

Zur Härtung der aufgebrachten Lackschichten werden im Falle von 1-K-Systemen im allgemeinen Temperaturen von 80 bis 180 °C, vorzugsweise 120 bis 150° C, angewendet. Die Härtungsdauer liegt zumeist bei 10 bis 40 Minuten, vorzugsweise 15 bis 30 Minuten. Bei 2-K-Systemen liegen die Temperaturen in der Regel zwischen 20 und 180 °C, vorzugsweise 20 und 80 °C und die Härtungszeiten zumeist zwischen 30 Minuten und 24 Stunden.

Die Härtung erfolgt vorzugsweise erst nach Beschichten mit dem Decklack, wobei vorgetrocknet oder bevorzugt naß in naß gearbeitet werden kann.

Die Schichtdicken der getrockneten Filme liegen bevorzugt bei 4 bis 80, vorzugsweise 10 bis 40 μm für die Überzüge aus den erfindungsgemäßen Überzugsmassen; falls ein Decklack eingesetzt wird, so liegen die Schichtdicken des getrockneten Films hier im allgemeinen bei 10 bis 100, vorzugsweise 20 bis 60 μm.

Die Zusammensetzung des klaren Decklackes ist nicht kritisch, vielmehr sind hierfür grundsätzlich alle bekannten, nicht oder nur transparent pigmentierten Überzugsmittel geeignet. Hierbei kann es sich um konventionelle lösungsmittelhaltige Klarlakke, wasserverdünnbare Klarlacke oder Pulverlacke handeln. Bevorzugt werden "High-solids" als klare Decklacke verwendet. Verwiesen sei hierzu beispielsweise auf die DE-Offenlegungsschriften 1 949 372 und 2 818 100 sowie auf die EP-Offenlegungsschrift 38 127 und die US-Patentschrift 4.591.533.

Die nachfolgenden Beispiele erläutern die Erfindung.

**Vergleichsbeispiel 1**

1a) Herstellung eines handelsüblichen, dem Stand der Technik entsprechenden Metallic-Basislackes

60 Teile einer 70%igen Lösung in (R)Solvesso 100 eines handelsüblichen ölfreien Polyesterharzes (Säurezahl: 10, dyn. Viskosität (Lieferform) 5500-7000 mPas/20 °C, Handelsprodukt: (R)Alftalat AN 951), 1 Teil hochdisperse Kieselsäure, 222,2 Teile einer 18%igen Lösung von Celluloseacetobutyrat in Butylacetat mit einem Acetylgehalt von 13 %, einem Butyrylgehalt von 37 % und einem mittleren Molekulargewicht von 20000 (Handelsprodukt CAB 381-0.1), 32,7 Teile mit Isobutanol partiell verethertes Melaminharz (ca. 55%ig in Isobutanol/Xylol 44:1, Molverhältnis Melamin:Formaldehyd = 1:4, verethert mit 3 Mol Isobutanol, dyn. Viskosität 500 mPas/20 °C, Handelsprodukt (R)Maprenal MF 590), 14 Teile Aluminiumpaste (Metallgehalt 65 %, Lösungsmittel: Testbenzin, Solventnaphtha), 6 Teile Solvesso 150, 5 Teile Methoxypropylacetat, 33 Teile einer 6%igen Dispersion eines handelsüblichen Wachses (HOECHST WACHS 371 FP) in 30 Teilen Xylol und 64 Teilen Butylacetat, 10,5 Teile Xylol und 10,5 Teile Butylacetat wurden zu einem Lack verarbeitet. Durch Zugabe von Xylol und Butylacetat im Mischungsverhältnis 1:1 wurde der Basislack auf eine Spritzkonsistenz (DIN-Becher mit 4 mm Düse nach DIN 53 211, 23 °C) von 15 s verdünnt. Dabei resultierte ein Festkörpergehalt von 18 % (2 g, 1 h, 120 °C). Der Basislack wurde mit einer Trockenfilmstärke von 18 μm auf einen handelsüblichen Automobilfüller aufgespritzt (Substrat: Stahlblech). Nach einer Ablüftungszeit von 5 Minuten wurde nachfolgender Klarlack aufgespritzt.

1 b) Klarlack für Zweischicht-Metallic-Lackierung

28,33 Teile handelsübliches fremdvernetzendes Acrylharz (65%ig gelöst in Xylol/Butanol, Verhältnis 3:1, dynam. Viskosität (50%ig in Xylol) 1140 mPas/20 °C, Säurezahl 13, bezogen auf Festharz, Handelsprodukt: (R)Synthacryl SC 303), 24,54 Teile handelsübliches fremdvernetzendes Acrylharz (75%ig gelöst in Solvesso 100, dyn. Viskosität 295 mPas/20 °C, Säurezahl: 10, bezogen auf Festharz, Handelsprodukt: Synthacryl SC 370), 28,7 Teile mit Isobutanol partiell verethertes Melaminharz (ca. 55%ig in Isobutanol/xylol 44:1, Molverhältnis Melamin:Formaldehyd = 1:4, verethert mit 3 Mol Isobutanol, dyn. Viskosität 500 mPas/20 °C, Handelsprodukt: Maprenal MF 650) als Härterkomponente 0,5 Teile handelsüblicher UV-Absorber (R)Tinuvin 292, 0,5 Teile handelsüblicher HAL-Stabilisator (R) Tinuvin 900, 5,12 Teile Isobutanol, 3,12 Teile eines aromatischen Kohlenwasserstoff-Gemisches vom Siedebereich 180-200 °C, 9,19 Teile eines aliphatischen Kohlenwasserstoff-Gemisches vom Siedebereich 145-200 °C wurden gemischt. Dieser Klarlack wurde dann mit einem Kohlenwasserstoff-Gemisch vom Siedebereich 150-180 °C auf eine Spritzviskosität (DIN-Becher mit 4 mm düse nach DIN 53 211, 23 °C) auf 26 s eingestellt und in einer Trockenfilmstärke von 40 μm aufgebracht. Beide Schichten wurden in einem Arbeitsgang in 25 Minuten bei 140 °C eingebrannt.

**Vergleichsbeispiel 2**

Das Vergleichsbeispiel 1a) wurde mit dem Unterschied wiederholt, daß anstelle von 222,2 Teilen einer 18%igen Lösung von Celluloseacetobutyrat in Butylacetat nur 111,1 Teile der gleichen Celluloseacetobutyrat-Lösung eingesetzt wurden. Daraus ergab sich ein Festkörpergehalt von 27 % (2 g, 1 h, 120 °C). Die weitere Verarbeitung erfolgte wie im Vergleichsbeispiel 1a), wobei ein Klarlack derselben Zusammensetzung wie bei Vergleichsbeispiel 1b) aufgespritzt und beide Schichten in einem Arbeitsgang 25 Minuten bei 140 °C eingebrannt wurden.

**Beispiel 3**

Das Vergleichsbeispiel 2 wurde mit den Unterschieden wiederholt, daß anstelle von 60 Teilen der 70%igen Lösung handelsüblichen ölfreien Polyesters Alftalat AN 951 in Solvesso 100 nunmehr 80 Teile des gleichen Harzes und anstelle von 32,7 Teilen des 55%igen handelsüblichen butylierten Melaminharzes Maprenal MF 590 46 Teile einer thixotropen Vormischung eingesetzt wurden. Diese Vormischung wurde so hergestellt, daß ein Celluloseacetobutyrat mit 4 % Acetylgehalt, 51 % Butyrylgehalt, einem Hydroxylgehalt von 0,8 und einem mittleren Molekulargewicht von 57000 (Handelsprodukt CAB 500-5) bei einer Temperatur von 80-100 °C in die vorstehend genannte Melaminharzlösung (Maprenal MF 590) in fester Form eingebracht und für ca. 120 Minuten dieses Temperaturniveau gehalten wurde. Es wurde ein Festkörpergehalt von 26 % (2 g, 1 h, 120 °C) erreicht. Die weitere Verarbeitung erfolgte wie in Vergleichsbeispiel 2.

**Beispiel 4**

Das Vergleichsbeispiel 2 wurde mit den Unterschieden wiederholt, daß anstelle von 60 Teilen der 70%igen Lösung in Solvesso 100 des handelsüblichen, ölfreien Polyesters Alftalat AN 951 nur 54,6 Teile des gleichen Harzes und außerdem 27 Teile einer thixotropen Vormischung eingesetzt wurden. Diese Vormischung wurde in der Weise hergestellt, daß das Celluloseacetobutyrat gemäß Beispiel 3 bei einer Temperatur von 120 °C, in das ölfreie Polyesterharz Alftalat AN 951 in fester Form eingebracht und für ca. 120 Minuten dieses Temperaturniveau gehalten wurde. In weiterer Abweichung von Vergleichsbeispiel 2 wurden anstelle von 32,7 Teilen eines 55 %igen handelsüblichen butylierten Melaminharzes (Handelsprodukt: Maprenal MF 590) jetzt 45 Teile dieses Harzes eingesetzt. Daraus resultierte ein Festkörpergehalt von 26 % (2 g, 1 h, 120 °C). Die weitere Verarbeitung erfolgte wie in Vergleichsbeispiel 2.

**Beispiel 5**

Das Vergleichsbeispiel 2 wurde mit den Unterschieden wiederholt, daß anstelle von 60 Teilen der 70%igen Lösung in Solvesso 100 des handelsüblichen, ölfreien Polyesterharzes Alftalat AN 951 51 Teile der 65%igen Lösung in Xylol/Butanol 3:1 des handelsüblichen, fremdvernetzenden Acrylharzes (dyn. Viskosität (50%ig in Xylol) 1140 mPas/20 °C, Säurezahl 13, bezogen auf Festharz, Handelsname: Synthacryl SC 303) und außerdem 36,6 Teile einer thixotropen Vormischung eingesetzt wurden. Diese Vormischung wurde durch Eintragen des Celluloseacetobutyrats gemäß Beispiel 3 in vorstehend genanntes Acrylharz bei einer Temperatur von 120 °C hergestellt. In weiterer Abweichung von Vergleichsbeispiel 2 wurden anstelle von 32,7 Teilen des 55%igen butylierten Melaminharzes Maprenal MF 590 45 Teile des gleichen Harzes eingesetzt. Es wurde ein Festkörpergehalt von 23 % (2 g, 2 h, 120 °C) erreicht. Die weitere Verarbeitung erfolgte wie in Vergleichsbeispiel 2.

**Beispiel 6**

Das Beispiel 3 wurde mit den Unterschieden wiederholt, daß anstelle von 46 Teilen der darin beschriebenen Vormischung 45 Teile des butylierten Melaminharzes Maprenal MF 590 und 26 Teile einer Vormischung eingesetzt wurden, die durch Einbringen des Celluloseacetobutyrats gemäß Beispiel 3 in Toluol in der Siedehitze innerhalb von ca. 120 Minuten vorgenommen wurde. Es wurde ein Festkörpergehalt von 26 % (2 g, 1 h, 120 °C) erreicht. Die weitere Verarbeitung erfolgte wie in Vergleichsbeispiel 2.

In der nachfolgenden Tabelle werden die Eigenschaften und das Verhalten der nach Vergleichsbeispiel 1 und 2 sowie den Beispielen 3 bis 6 (Erfindung) erhaltenen Lacke und Lackschichten aufgeführt. Die Beurteilung der eingebrannten Lackierungen erfolgte visuell.

|  | Vergleichs-beispiel 1 | Vergleichs-beispiel 2 | erfindungsgemäß | | | |
|  |  |  | Beispiel 3 | Beispiel 4 | Beispiel 5 | Beispiel 6 |
|---|---|---|---|---|---|---|
| Festkörpergehalt | 18 % | 27 % | 26 % | 26 % | 23 % | 26 % |
| Auftrag durch Spritzen | kein Ablaufen | Ablaufen, "Gardinen-bildung" | kein Ablaufen | | | |
| Beurteilung der eingebrannten Zweischicht-lackierung | einwandfreie Metalleffekt-lackierung mit hohem Glanz | Filmdefekte wie Kochblasen, wolkiger Effekt, starkes Anlösen des Basislackes und Ausschwimmen der Aluminium-teilchen in die Decklackschicht; im Glanz deutlich schlechter als Vgl. 1 und Beispiele 3 bis 6 | einwandfreie Metalleffektlackierung mit hohem Glanz. In Glanz und Metall-Effekt deutlich besser als gemäß Vergleichsbeispiel 2. | | | |

EP 0 402 772 A1

## Ansprüche

1. Überzugsmasse zur Herstellung von Beschichtungen, insbesondere von Mehrschichtlackierungen aus mindestens einer Basisschicht und gegebenenfalls mindestens einer transparenten Deckschicht, wobei die Überzugsmasse filmbildende Harze (A), Celluloseester (B), Lösungsmittel (C), vorzugsweise Metall-Pigmente (D) und gegebenenfalls Vernetzungsmittel (E) sowie gegebenenfalls weitere Lackadditive (F) enthält, dadurch gekennzeichnet, daß der Celluloseester (B) einen Acetylgehalt von 2,0 bis 30 Gew.-%, einen Butyrylgehalt von 17 bis 53 Gew.-% und ein mittleres Molekulargewicht $\overline{M}_n$ von mindestens 25 000 aufweist und wobei dieser Celluloseester (B) in die Überzugsmasse in Form einer pastösen, thixotropen Vormischung eingebracht wurde.

2. Überzugsmasse nach Anspruch 1, dadurch gekennzeichnet, daß der Celluloseester (B) einen Acetylgehalt von 2 bis 5 Gew.-% und einen Butyrylgehalt von 47 bis 53 Gew.-% aufweist.

3. Überzugsmasse nach Anspruch 1 und/oder 2, dadurch gekennzeichnet, daß der Celluloseester (B) ein mittleres Molekulargewicht $\overline{M}_n$ von 30 000 bis 60 000 besitzt.

4. Überzugsmasse nach mindestens einem der Ansprüche 1 bis 3, dadurch gekennzeichnet, daß die pastöse thixotrope Vormischung neben dem Celluloseester (B) ein Verdünnungsmittel enthält, das (B) anquillt.

5. Übezugsmasse nach Anspruch 4, dadurch gekennzeichnet, daß das Verdünnungsmittel ein aromatischer oder aliphatischer Kohlenwasserstoff oder ein höherer Alkohol ist.

6. Überzugsmasse nach Anspruch 4 und/oder 5, dadurch gekennzeichnet, daß in der thixotropen Vormischung zusätzlich ein Aminoharz, ein Polyesterharz, ein Acrylatharz oder entsprechende Gemische vorhanden sind.

7. Überzugsmasse nach mindestens einem der Ansprüche 1 bis 6, dadurch gekennzeichnet, daß die Menge an Celluloseester (B) 0,5 bis 6 Gew.-%, bezogen auf die Summe von (A), (B) und gegebenenfalls (E), beträgt.

8. Überzugsmasse nach mindestens einem der Ansprüche 1 bis 7, dadurch gekennzeichnet, daß als filmbildendes Harz (A) ein hydroxylgruppenhaltiges Polyacrylatharz oder ein hydroxylgruppenhaltiger, ölfreier Polyester dient.

9. Überzugsmasse nach mindestens einem der Ansprüche 1 bis 8, dadurch gekennzeichnet, daß das Vernetzungsmittel (E) ein Melaminharz ist.

10. Überzugsmasse nach mindestens einem der Ansprüche 1 bis 9, dadurch gekennzeichnet, daß der Festkörpergehalt 15 bis 30 Gew.-% beträgt.

11. Überzugsmasse nach mindestens einen der Ansprüche 1 bis 10, dadurch gekennzeichnet, daß sie als Lackadditive (F) (Farb-)Pigmente enthält.

12. Verfahren zur Herstellung von Mehrschichtlackierungen, bei dem eine vorzugsweise Metallpigmente enthaltende Überzugsmasse zur Ausbildung einer Basisschicht und nach einer Ablüftzeit hierauf eine zweite, eine transparente Deckschicht bildende Überzugsmasse nach dem Naß-in-Naß-Verfahren auf ein Substrat aufgebracht werden, dadurch gekennzeichnet, daß für die Basisschicht die Überzugsmassen nach mindestens einem der Ansprüche 1 bis 11 eingesetzt werden.

13. Substrat beschichtet mit einer aus mindestens einer vorzugsweise Metallpigmente enthaltenden Basisschicht und mindestens einer transparenten Deckschicht bestehenden Mehrschichtlackierung, dadurch gekennzeichnet, daß zur Herstellung der Basisschicht eine Überzugsmasse nach mindestens einem der Ansprüche 1 bis 11 verwendet worden ist.

Europäisches Patentamt

**EUROPÄISCHER RECHERCHENBERICHT**

Nummer der Anmeldung

EP 90 11 0795

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-3 637 546 (F. PARKER) <br> * Zusammenfassung; Spalte 3, Zeilen 46-57; Spalte 6, Zeilen 29-40 * <br> --- | 1,2,13 | C 09 D 201/00 <br> C 09 D 7/00 // <br> (C 09 D 201/00 <br> C 09 D 101:14 ) |
| Y | US-A-3 411 941 (J. LOWE) <br> * Spalte 3, Zeilen 43-67 * <br> --- | 1,12,13 | |
| A | US-A-4 532 177 (R. MAHAR) <br> * Zusammenfassung * <br> ----- | | |

RECHERCHIERTE SACHGEBIETE (Int. Cl.5)

C 09 D
C 08 L
B 05 D

Der vorliegende Recherchenbericht wurde für alle Patentansprüche erstellt

| Recherchenort | Abschlußdatum der Recherche | Prüfer |
|---|---|---|
| DEN HAAG | 10-09-1990 | SOMERVILLE F.M. |